# EUROPEAN PATENT APPLICATION

(11) **EP 4 790 571 A1**
(43) Date of publication of application: **12.08.2026**
(21) Application number: 26154593.3
(22) Date of filing: 28.01.2026
(51) Int. Cl.: G06F 16/9032

(54) **COMPUTER PROGRAM, RESPONSE-GENERATION SUPPORT METHOD, AND INFORMATION PROCESSING APPARATUS**

(30) Priority: 05.02.2025 JP 2025017864
(71) Applicant: Fujitsu Limited, Kawasaki-shi, Kanagawa 211-8588 (JP)
(72) Inventor: ISHIKAWA, Yu, Kawasaki-shi, Kanagawa, 211-8588 (JP); ODASHIMA, Shigeyuki, Kawasaki-shi, Kanagawa, 211-8588 (JP)
(74) Representative: Hoffmann Eitle

(57) **Abstract**

An information processing apparatus determines, based on target information regarding an imitation target, a first knowledge domain in which the imitation target has knowledge and a first knowledge level of the imitation target regarding the first knowledge domain. Upon receiving a first question, the information processing apparatus instructs an agent, which responds to a question by using a language model, to generate a response to the first question. In instructing the response, the information processing apparatus instructs a response generated by imitating thoughts of the imitation target that are referable to information restricted based on the first knowledge domain and the first knowledge level.

## Description

### FIELD

The embodiments discussed herein relate to a computer program, a response-generation support method, and an information processing apparatus.

### BACKGROUND

By utilizing a large language model (LLM), a computer is capable of automatically generating a high-accuracy response equivalent to a human response. When such an LLM is used, a generation artificial intelligence (AI) system that imitates a specific persona (a virtual character profile) may substitute for a human interlocutor in dialogue training and other dialog-based tasks that have conventionally been carried out in person. As a technique for enabling a generation AI system to imitate a persona, there is, for example, technology for fine-tuning an LLM according to the persona. Fine-tuning is a technique for improving performance by adapting a pretrained model to a specific task.

As technologies utilizing an LLM, techniques have been proposed in which analysis of search results is used to improve a task-specific generation model. Technologies based on adaptive language models have also been proposed in order to address interactive security and safety with data privacy. A communication system capable of appropriately representing an individual user's characteristics and personality has also been proposed. A response-generation method has further been proposed, in which responses are generated by imitating a target virtual character on the basis of only several utterances of the virtual character through a dialogue model. In addition, a method has been proposed in which a target neural network is adjusted by using automatically-generated test cases before deploying the target neural network. See, for example, the following literatures.
U.S. Patent Application Publication No. 2024/0281446
U.S. Patent Application Publication No. 2024/0330421
International Publication Pamphlet No. WO 2016/104736
Japanese Laid-open Patent Publication No. 2023-073220
Japanese Laid-open Patent Publication No. 2023-109726

Conventionally, in a system that imitates a persona, there is a possibility that knowledge that the persona does not have is included in a generated response. For example, when an LLM or a referenced database (DB) contains information that the persona does not have, the information may fail to be properly excluded and may be included in the response. When such knowledge that the persona does not have is included in the response, the response becomes unnatural as a response imitating the persona.

### SUMMARY

In one aspect, a technique is provided for suppressing output of a response that includes knowledge that the imitation target does not have.

In one aspect, there is provided a computer program that causes a computer to execute a process including: determining, based on target information regarding an imitation target, a first knowledge domain in which the imitation target has knowledge and a first knowledge level of the imitation target regarding the first knowledge domain; and instructing, upon receiving an input of a first question, an agent that responds to a question by using a language model to generate a response to the first question by imitating thoughts of the imitation target that are referable to information restricted based on the first knowledge domain and the first knowledge level.

### BRIEF DESCRIPTION OF DRAWINGS

FIG. 1 illustrates an example of a response-generation support method according to a first embodiment;
FIG. 2 illustrates an example of a system configuration;
FIG. 3 illustrates an example of hardware configuration of an AI system;
FIG. 4 is a block diagram illustrating functions included in the AI system;
FIG. 5 illustrates an example of processing for setting information detail levels;
FIG. 6 illustrates an example of procedures of estimation processing for a knowledge domain and a knowledge level;
FIG. 7 illustrates an example of information used for estimating a knowledge domain and a knowledge level;
FIG. 8 illustrates an example of persona information;
FIG. 9 illustrates an example of knowledge-level definition information;
FIG. 10 illustrates an example of knowledge-level format information;
FIG. 11 illustrates an example of a prompt for estimating knowledge domains and knowledge levels;
FIG. 12 illustrates an example of a knowledge-level list;
FIG. 13 illustrates an example sequence diagram of a procedure for response processing in a dialogue format that imitates a persona;
FIG. 14 illustrates an example of information used for generating a response to a question;
FIG. 15 illustrates an example of processing for estimating a knowledge level of a persona with respect to a knowledge domain useful for responding to a question;
FIG. 16 illustrates an example of a prompt generated by Chain-of-Thought (CoT) prompting;
FIG. 17 illustrates an example in which a persona having no interest in home appliances is imitated to generate a response to a question concerning a home appliance;
FIG. 18 illustrates an example in which a persona having an interest in home appliances is imitated to generate a response to a question concerning a home appliance;
FIG. 19 illustrates an example in which a persona having no interest in programming languages is imitated to generate a response to a question concerning a programming language;
FIG. 20 illustrates an example in which a persona having an interest in programming languages is imitated to generate a response to a question concerning a programming language;
FIG. 21 illustrates an example in which a persona having no knowledge about a disease is imitated to generate a response to a question concerning the disease; and
FIG. 22 illustrates an example in which a persona having knowledge about a disease is imitated to generate a response to a question concerning the disease.

### DESCRIPTION OF EMBODIMENTS

Hereinafter, embodiments will be described with reference to the drawings. Note that the respective embodiments may be implemented in combination with one another insofar as no contradictions arise.

### (a) First Embodiment

A first embodiment is a response-generation support method for suppressing generation of a response that includes knowledge that an imitation target that is virtually defined (hereinafter sometimes referred to as "a person") does not have when a response corresponding to a question is generated by imitating thinking of the imitation target.

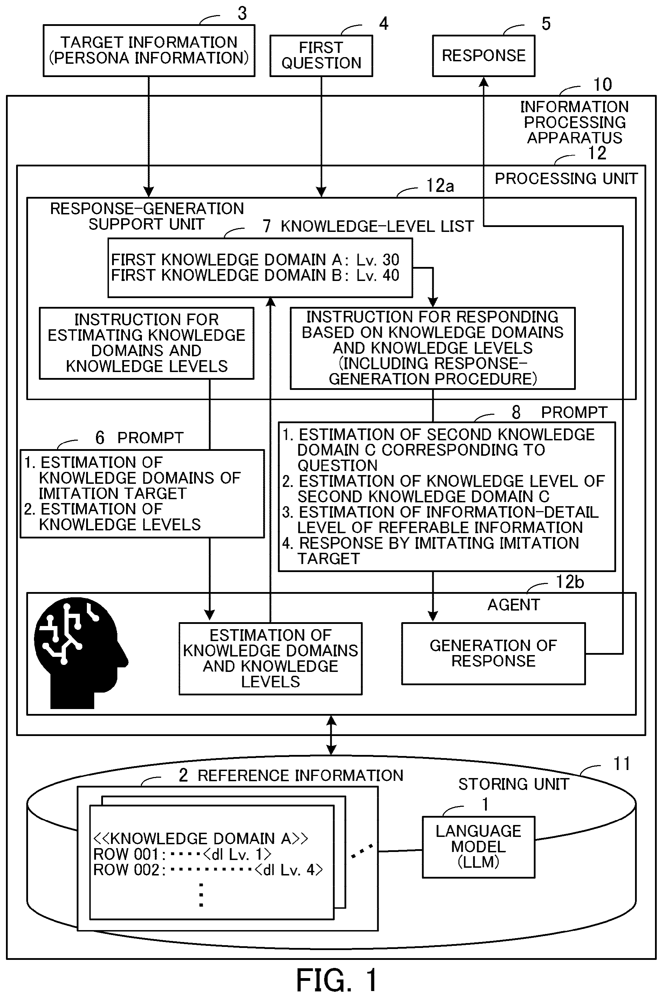

FIG. 1 illustrates an example of a response-generation support method according to the first embodiment. FIG. 1 depicts an information processing apparatus 10 for implementing the response-generation support method. The information processing apparatus 10 may implement the response-generation support method by executing a response-generation support program, for example.

The information processing apparatus 10 includes a storing unit 11 and a processing unit 12. The storing unit 11 is, for example, a memory or a storage device included in the information processing apparatus 10. The processing unit 12 is, for example, a processor included in the information processing apparatus 10. The information processing apparatus 10 may include a plurality of processors. Among multiple processes performed by the information processing apparatus 10, certain processes and other processes may be executed by respective different processors.

The storing unit 11 stores a language model 1 and reference information 2. The language model 1 is a trained machine learning model that performs a response or data processing corresponding to an input of a question or a request. The language model 1 is, for example, an LLM implemented by a neural network. The reference information 2 is information usable as a knowledge source when a response is generated using the language model 1. In the reference information 2, for example, knowledge related to each knowledge domain is set as respective reference-unit information. Each piece of the reference-unit information has set therein an information-detail level indicating a degree of detail of the reference-unit information.

The processing unit 12 includes a response-generation support unit 12a and an agent 12b. The response-generation support unit 12a generates prompts 6 and 8 that provide an appropriate response 5 to a first question 4, and supplies the prompts 6 and 8 to the agent 12b. The agent 12b performs a response to a question by using the language model 1. The response-generation support unit 12a is able to cause the agent 12b to generate a response that imitates thinking of the imitation target.

For example, the response-generation support unit 12a determines first knowledge domains that the imitation target has and first knowledge levels of the imitation target related to the respective first knowledge domains, based on target information 3 related to the imitation target. The target information 3 indicates a persona profile of the imitation target, for example. The target information 3 may also be referred to as persona information. For example, the response-generation support unit 12a instructs the agent 12b, by the prompt 6, to perform estimation of the first knowledge domains and estimation of the first knowledge levels based on the target information 3. The agent 12b that has received the prompt 6 estimates the first knowledge domains and the first knowledge levels by using the language model 1. The agent 12b transmits a knowledge-level list 7 that indicates the estimated first knowledge domains and the estimated first knowledge levels to the response-generation support unit 12a.

Thereafter, when the first question 4 is input to the information processing apparatus 10, the response-generation support unit 12a instructs the agent 12b to generate the response 5 to the first question 4 by imitating thinking of the imitation target that is capable of referring to information that is restricted based on the first knowledge domains and the first knowledge levels. For example, the response-generation support unit 12a supplies the agent 12b with the prompt 8 that indicates a response-generation procedure. For example, the prompt 8 includes the target information 3, the first question 4, and the knowledge-level list 7. The agent 12b that has acquired the prompt 8 generates the response 5 in accordance with instructions indicated in the prompt 8.

In this manner, the agent 12b is enabled to imitate thinking of the imitation target that is capable of referring to information restricted based on knowledge domains that the imitation target has and knowledge levels related to the respective domains. As a result, information that the imitation target does not know is not referred to, and generation of a response including such information is suppressed.

The prompt 8 includes, for example, an instruction for estimation of a second knowledge domain that is useful for a response to the first question 4 based on the first question 4. The prompt 8 also includes an instruction for estimation of a second knowledge level of the imitation target related to the second knowledge domain, based on the first knowledge domains and the first knowledge levels. The prompt 8 further includes an instruction for a response to the first question 4 by imitating the imitation target.

By the prompt 8, the second knowledge level indicating knowledge of the imitation target related to the second knowledge domain that is useful for responding to the first question 4 is accurately estimated based on information indicated in the knowledge-level list 7. As a result, information referable when the response 5 is generated is appropriately determined, and inclusion of information that the imitation target is unable to utilize in the response 5 is suppressed.

In the prompt 8, the response-generation support unit 12a instructs estimation of the second knowledge level based on the first knowledge level of a first knowledge domain that is similar to the second knowledge domain, for example. Consequently, the second knowledge level is estimated without being affected by knowledge levels of the imitation target related to first knowledge domains that are dissimilar to the second knowledge domain. As a result, estimation accuracy of the second knowledge level is improved, information that is referable when the response 5 is generated is appropriately determined, and inclusion of information that the imitation target is unable to utilize in the response 5 is suppressed.

The response-generation support unit 12a is also able to instruct, in the prompt 8, estimation of a first information-detail level that indicates a degree of detail of information that the imitation target is able to utilize regarding the second knowledge domain, based on the second knowledge level. The information that the imitation target is able to utilize is information that the imitation target is able to understand to an extent that enables the imitation target to explain the content of the information to a third party when the imitation target encounters the information. In this case, the response-generation support unit 12a instructs generation of a response to the first question 4 by limiting information referable by the imitation target to the information related to the second knowledge domain having the first information-detail level.

As a result, among pieces of information related to the second knowledge domain, information that the imitation target is unable to understand and utilize is prevented from being included in the response.

The processing unit 12 may also cause the agent 12b to perform setting of the information-detail level for respective reference-unit information in the reference information 2. For example, the processing unit 12 instructs the agent 12b to estimate, for each piece of reference-unit information in the reference information 2, the information-detail level indicating a degree of detail of the reference-unit information. Consequently, setting of the information-detail level is facilitated, and an amount of information within the reference information 2 for which an information-detail level is set is increased. As a result, the amount of information within a restricted range is also increased, and accuracy of the response to a question is improved.

### (b) Second Embodiment

A second embodiment is an AI system that restricts referable information according to persona information and suppresses generation of a response including information that goes beyond knowledge of the persona.

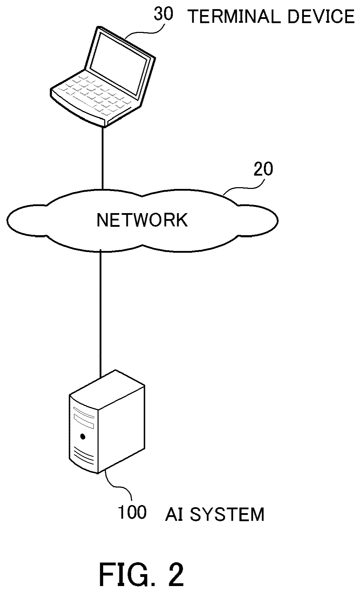

FIG. 2 is a diagram illustrating an example of a system configuration. An AI system 100 is a computer system configured by one or a plurality of computers. For example, the AI system 100 is a cloud computing system. The AI system 100 performs interaction for responding to a question by imitating a persona specified by persona information.

A terminal device 30 is connected to the AI system 100 through a network 20. The terminal device 30 is a computer used by a user who interacts with the AI system 100 that imitates a persona specified by persona information.

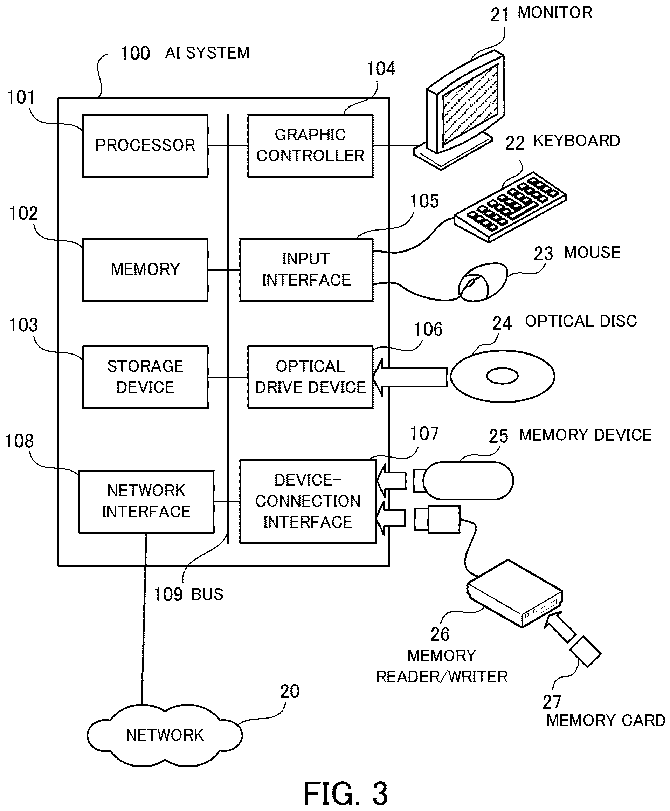

FIG. 3 is a diagram illustrating an example of hardware configuration of the AI system. The AI system 100 is entirely controlled by a processor 101. The processor 101 is connected to a memory 102 and a plurality of peripheral devices through a bus 109.

The AI system 100 may be a multiprocessor system having a plurality of processors. A set of the plurality of processors in the multiprocessor system may be collectively referred to as the processor 101. The processor 101 may also be referred to as processor circuitry. Each of the plurality of processors executes a part or all of multiple processes executed in the AI system 100. When multiple related processes exist, two or more of the related processes may be executed by respective different processors.

The processor 101 is, for example, a central processing unit (CPU), a micro processing unit (MPU), or a digital signal processor (DSP). At least a part of the functions realized by the processor 101 executing the program may be realized by electronic circuitry such as an application specific integrated circuit (ASIC) or a programmable logic device (PLD).

The memory 102 is used as a main storage device of the AI system 100. The memory 102 temporarily stores at least a part of an operating system (OS) program or an application program for execution by the processor 101. The memory 102 also stores various data used for processing by the processor 101. As the memory 102, a volatile semiconductor storage device such as a random access memory (RAM) is used.

Peripheral devices connected to the bus 109 include a storage device 103, a graphic controller 104, an input interface 105, an optical drive device 106, a device-connection interface 107, and a network interface 108.

The storage device 103 performs electrical or magnetic writing and reading of data with respect to a built-in recording medium. The storage device 103 is used as an auxiliary storage device of the AI system 100. The storage device 103 stores an OS program, application programs, and various data. As the storage device 103, for example, a hard disk drive (HDD) or a solid state drive (SSD) is used.

The graphic controller 104 is an arithmetic device that performs image processing. The graphic controller 104 is, for example, a graphics processing unit (GPU). A monitor 21 is connected to the graphic controller 104. The graphic controller 104 displays an image on a screen of the monitor 21 in accordance with instructions from the processor 101. As the monitor 21, a display device using electro luminescence (EL) or a liquid crystal display device is used. When a GPU is used as the graphic controller 104, the graphic controller 104 also executes complex numerical computation such as matrix computation.

A keyboard 22 and a mouse 23 are connected to the input interface 105. The input interface 105 transmits signals sent from the keyboard 22 and the mouse 23 to the processor 101. The mouse 23 is an example of a pointing device, and another pointing device may be used. Examples of other pointing devices include a touch panel, a tablet, a touchpad, and a trackball.

The optical drive device 106 performs reading of data recorded on an optical disc 24 or writing of data to the optical disc 24 by using laser light. The optical disc 24 is a portable recording medium in which data is recorded to be readable by reflection of light. Examples of the optical disc 24 include a digital versatile disc (DVD), a DVD-RAM, a compact disc read only memory (CD-ROM), a CD-recordable (CD-R), and a CD-rewritable (CD-RW).

The device-connection interface 107 is a communication interface for connecting peripheral devices to the AI system 100. For example, a memory device 25 or a memory reader/writer 26 is connectable to the device-connection interface 107. The memory device 25 is a recording medium that is capable of communication with the device-connection interface 107. The memory reader/writer 26 is a device that performs writing of data to a memory card 27 or reading of data from the memory card 27. The memory card 27 is a card-type recording medium.

The network interface 108 is connected to the network 20. The network interface 108 performs transmission and reception of data with another computer or communication device through the network 20. The network interface 108 is a wired communication interface connected by a cable to a wired communication device such as a switch or a router. The network interface 108 may alternatively be a wireless communication interface that is communication-connected by radio waves to a wireless communication device such as a base station or an access point.

The AI system 100 realizes processing functions of the second embodiment by the above-described hardware. The information processing apparatus 10 described in the first embodiment may also be realized by hardware similar to the AI system 100 illustrated in FIG. 3.

The AI system 100 realizes processing functions of the second embodiment by execution of a program recorded in a computer-readable recording medium, for example. A program describing processing contents to be executed by the AI system 100 is recordable in various recording media. For example, a program to be executed by the AI system 100 is storable in the storage device 103. The processor 101 loads at least a part of the program in the storage device 103 into the memory 102 and executes the program. The program to be executed by the AI system 100 may also be recorded in a portable recording medium such as the optical disc 24, the memory device 25, or the memory card 27. A program stored in a portable recording medium becomes executable after being installed into the storage device 103 under control of the processor 101, for example. The processor 101 may also directly read and execute a program from the portable recording medium.

In such a system, a user transmits persona information representing a desired character profile to the AI system 100 by using the terminal device 30 and requests an interactive simulation in accordance with the persona information. The AI system 100 then performs responses imitating a persona character to questions sent from the terminal device 30.

The AI system 100 has a database (DB) in which information serving as a basis for responses is stored. The database is provided, for example, for each field. When responding to a question, the AI system 100 refers to the database and generates response content. By referring to the database, hallucination (response errors) is suppressed. On the other hand, the database may contain information that the persona is unlikely to know. Therefore, technology for excluding information that the persona is unable to know from response content is needed.

For example, in technology called Character-LLM, an LLM that imitates a historical great figure may be generated. In the case of a historical great figure, information after the death of the figure is information that the figure is unable to know. Therefore, fine-tuning is performed on the LLM in order to exclude information that the figure is unable to know.

However, it is difficult to prepare, in advance, an LLM that has been fine-tuned for all personas of unspecified variety for which users desire dialogue training. Furthermore, in assumed applications, accurately imitating an imitation target by using a fine-tuned LLM is in need of restriction of reference information not only in a time axis but also in finer axes such as specialties or interests. It is difficult to comprehensively generate pretrained LLMs for all conceivable personas.

For example, consider a case where sales training is performed by using the AI system 100. A purpose of the sales training is that a sales representative (a user) improves sales skills in question-and-answer interaction with an assumed customer (an agent to which persona information is given).

Persona information such as "not knowledgeable about home appliances" is given to the AI system 100 that imitates a customer. In such a case, it is important that the AI system 100 does not start talking about detailed information regarding air conditioners.

Consider a case where a question "Please tell me what you know about Goku-Dan air conditioners" is input to the AI system 100 that imitates a persona "not knowledgeable about home appliances". If technical information on home appliances and specifications of "Goku-Dan air conditioners" are included in the database, the AI system 100 may generate a response including specialized terminology on air conditioners or information that is obtainable only through thorough checking of the specifications. In such a case, behavior of the AI system 100 becomes inappropriate as imitation of the persona "not knowledgeable about home appliances".

Therefore, the AI system 100 estimates usability of the database for each knowledge domain and a reference range within the usable database, based on inputs such as persona information. Then, the AI system 100 generates a response corresponding to a question, based on referable information within the usable database.

For example, a cause of generating a response that contains information deviating from a persona is considered to be that no criterion exists for determining whether the information handled by the persona involves expertise (usability of information from a difficulty-level viewpoint) and how much the persona knows (a reference range of information). Therefore, the AI system 100 performs Chain-of-Thought (CoT) prompting corresponding to multi-stage filtering. That is, the AI system 100 estimates, from two viewpoints of "knowledge domains" and "knowledge levels", which domain is involved in responding to a question and how likely the persona is capable of handling information in the domain. Then, the AI system 100 generates a response imitating the persona, based on referable information determined by the estimation.

Furthermore, the AI system 100 introduces "an information detail level" separately regarding how much the persona may know about reference information and determines a restriction of referable information by using the information detail level. In the example of an air conditioner brochure, the AI system 100 controls how much the persona may understand terminology related to air conditioners by "knowledge domains" and "knowledge levels". Furthermore, the AI system 100 controls whether the persona knows information described in the brochure by using "an information detail level". This enables diverse knowledge restrictions in accordance with persona information.

In summary, the AI system 100 performs "knowledge-domain estimation", "knowledge-level estimation", and "information-detail-level estimation" in order to identify information that is usable from internal knowledge of an LLM and from a database. These estimation processes are used for the following purposes.

Knowledge-domain estimation is processing for estimating knowledge domains (for example, botany, automotive engineering, etc.) involved in understanding input persona information and a query (a question). A result of the knowledge-domain estimation is used, for example, for restricting terminology that a persona represented by the AI system 100 is capable of understanding and using when the persona is imitated.

Knowledge-level estimation is processing for estimating an index (a knowledge level) indicating how deep the persona's knowledge is with respect to the previously estimated knowledge domains. The knowledge levels of the persona for the respective knowledge domains are used, for example, for restricting internal knowledge of the LLM that is usable during generation of a response by using the LLM, or for restricting reference information within the database.

Information-detail-level estimation is processing for estimating an index (an information detail level) representing how detailed information within the database is understandable by the persona. An information detail level that is referable is used, for example, for restricting granularity of information that is referable during generation of a response.

In this manner, after performing "knowledge-domain estimation", "knowledge-level estimation", and "information-detail-level estimation", the AI system 100 restricts information that is usable for generation of a response among information within the database and internal information of the LLM by using estimation results. This suppresses generation of responses that deviate from capabilities of the persona.

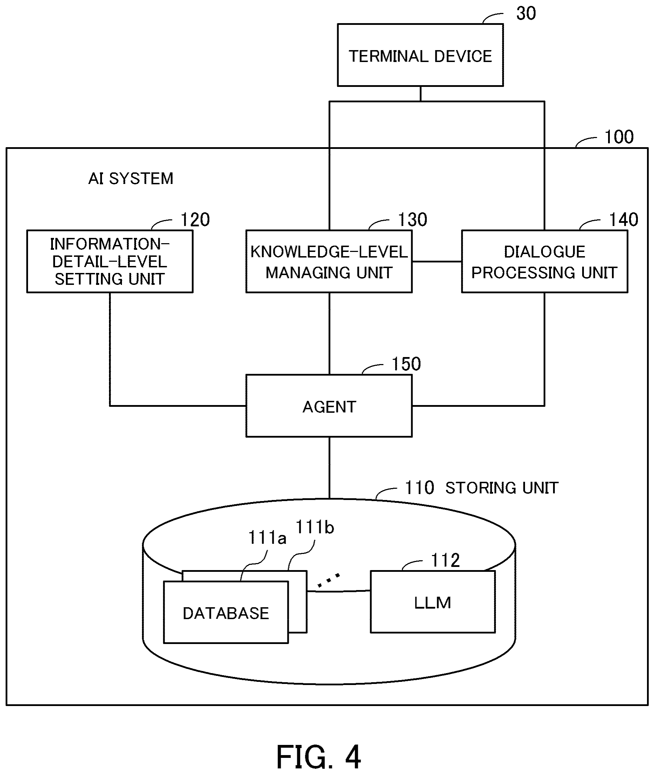

FIG. 4 is a block diagram illustrating functions included in the AI system 100. The AI system 100 includes a storing unit 110, an information-detail-level setting unit 120, a knowledge-level managing unit 130, and a dialogue processing unit 140.

The storing unit 110 stores a plurality of databases 111a, 111b, and so on for respective knowledge domains, and the LLM 112. The databases 111a, 111b, and so on are referenced when generating response content to a question. The LLM 112 is a trained model learned using general-purpose training data without being limited to a particular persona.

The information-detail-level setting unit 120 sets an information detail level for each predetermined reference-unit information (for example, a sentence) included respectively in the databases 111a, 111b, and so on. For example, the information-detail-level setting unit 120 causes the agent 150 to execute information-detail-level estimation processing using the LLM 112. The information detail level is an index indicating how specific or specialized the information indicated in that reference-unit information is. For example, the information detail level for information indicating an outline of a certain matter is set low. The information detail level for information indicating detailed contents based on expert knowledge regarding a certain matter is set high.

The knowledge-level managing unit 130, based on the persona information indicating a specific persona, determines knowledge levels of the persona for the respective knowledge domains that the persona has. The knowledge level is a knowledge level of the persona regarding the corresponding knowledge domain. For example, the knowledge-level managing unit 130 instructs the agent 150 to perform knowledge-level estimation using the LLM 112 based on the persona information. The knowledge-level managing unit 130 sends a knowledge-level list indicating the knowledge levels of the persona determined for respective knowledge domains, together with the persona information, to the dialogue processing unit 140.

When the dialogue processing unit 140 receives, from the terminal device 30, a query indicating a question by a user, the dialogue processing unit 140 generates a prompt indicating a procedure for generating a response that imitates the persona using the LLM 112. The dialogue processing unit 140 sends the generated prompt to the agent 150. When the dialogue processing unit 140 receives a response from the agent 150, the dialogue processing unit 140 sends the response to the terminal device 30.

The agent 150 executes various inference processes using the LLM 112. For example, the agent 150, in accordance with instructions from the information-detail-level setting unit 120, estimates an information detail level for each reference-unit information in the databases 111a, 111b, and so on. The agent 150, in accordance with instructions from the knowledge-level managing unit 130, estimates the knowledge domains in which the persona has knowledge and estimates the knowledge levels of the persona regarding the knowledge domains. Further, when the agent 150 acquires a prompt corresponding to a question from the dialogue processing unit 140, the agent 150 interprets the information to be referenced in the databases 111a, 111b, and so on by imitating the persona in accordance with the prompt and generates a response to the question.

Functions of respective elements illustrated in FIG. 4 may be realized by causing the processor 101 to execute program modules corresponding to the respective elements.

By the AI system 100 having such functions, dialogue that appropriately imitates the persona is realized by using the general-purpose LLM 112. Information in the databases 111a, 111b, and so on, which is referenced when generating a response to a question, has an information detail level set in advance based on instructions from the information-detail-level setting unit 120.

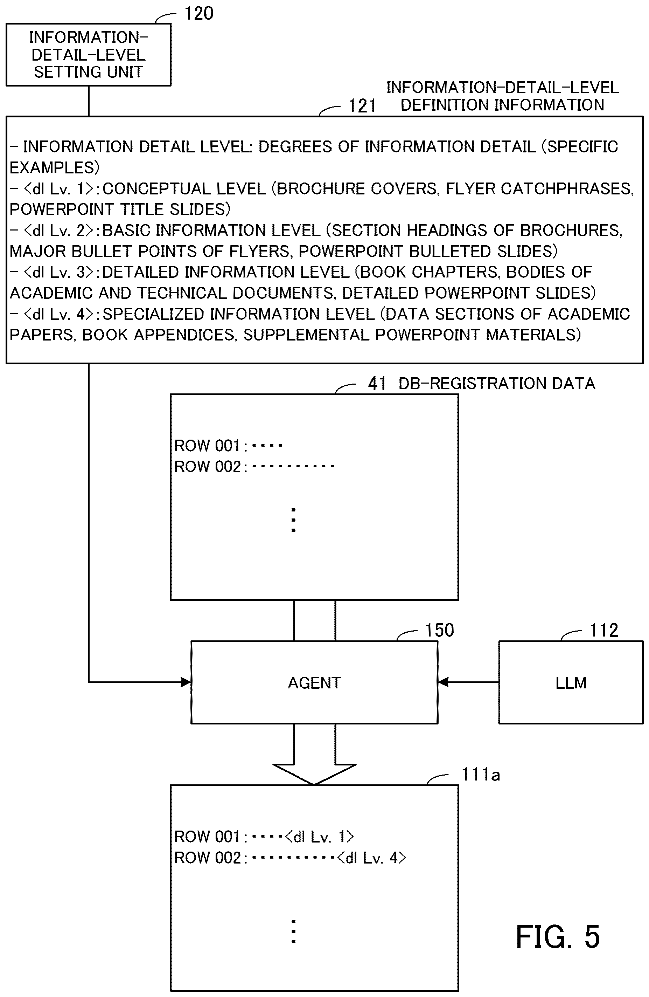

FIG. 5 illustrates an example of processing for setting information detail levels. Setting the information detail levels for the databases 111a, 111b, and so on is performed, for example, at the time of data registration. In such a case, when DB-registration data 41 is input to the AI system 100, the information-detail-level setting unit 120 instructs the agent 150 to set an information detail level for each row in the DB-registration data 41. At that time, the information-detail-level setting unit 120 sends information-detail-level definition information 121 to the agent 150.

The information-detail-level definition information 121 illustrates, for each information detail level, specific examples of information corresponding to the information detail level. In the example of FIG. 5, the information-detail-level definition information 121 defines four levels of information detail.

The "information detail level 1 (dl Lv. 1)" is a conceptual level. Specific examples of the conceptual level include brochure covers, catchphrases on flyers, and title slides of PowerPoint presentations.

The "information detail level 2 (dl Lv. 2)" is a basic information level. Specific examples of the basic information level include section headings of brochures, major bullet points of flyers, and bullet-point slides of PowerPoint presentations.

The "information detail level 3 (dl Lv. 3)" is a detailed information level. Specific examples of the detailed information level include chapters of books, bodies of academic and technical documents, and detailed slides of PowerPoint presentations.

The "information detail level 4 (dl Lv. 4)" is a specialized information level. Specific examples of the specialized information level include data sections of academic papers, appendices of books, and supplemental materials of PowerPoint presentations.

The agent 150 uses the information-detail-level definition information 121 as determination criteria and determines, by using the LLM 112, an information detail level for each row in the DB-registration data 41. For example, the agent 150 sequentially extracts rows from the DB-registration data 41 one by one and calculates an output of the LLM 112 by inputting, to the LLM 112, an instruction for determining an information detail level that includes the extracted row. The agent 150 assigns, to each row in the DB-registration data 41, a tag indicating an information detail level, and registers the DB-registration data 41, with the tags assigned, in the database 111a that serves as a registration destination.

When the agent 150 generates a response by imitating the persona, an information detail level of information that is allowed to be referenced in the databases 111a, 111b, and so on is determined in accordance with a knowledge level of the persona for each knowledge domain. For example, for a knowledge domain in which the persona has a high knowledge level, rows in a database corresponding to the knowledge domain are referable up to those having high information detail levels. Conversely, for a knowledge domain in which the persona has a low knowledge level, only rows having low information detail levels in the database corresponding to the knowledge domain are referable.

In this way, by combining a knowledge level of the persona with an information detail level, information that is allowed to be referenced is limited. By limiting the information to be referenced in accordance with the information detail level, responses are generated that are restricted to information that is understandable for the persona in accordance with the persona's degree of interest and basic knowledge among information in the databases 111a, 111b, and so on, which serve as external materials. That is, even if a real person corresponding to the persona referred to the databases 111a, 111b, and so on, the real person would not be able to understand information for which the real person has no interest and no basic knowledge. When the real person responds to a question from another person, even if the real person were allowed to refer to many materials, the real person would not respond using information that is not understandable. By using the information detail level, when the agent 150 imitates the persona to respond to a question, the agent 150 is prevented from responding based on information that is not understandable for the persona.

The determination of the information detail level for each row in the databases 111a, 111b, and so on may be performed dynamically by the agent 150 at the time of generating a response to a question, instead of being performed in advance. The dynamic determination of the information detail level at the time of generating a response to a question may be realized, for example, by using the LLM 112.

After the information detail levels are set for the databases 111a, 111b, and so on, a user who intends to cause the AI system 100 to imitate a persona sends, by using the terminal device 30, persona information indicating a persona to be imitated to the AI system 100. In the AI system 100 that receives the persona information, the knowledge-level managing unit 130 and the agent 150 cooperate with each other to estimate a knowledge domain of the persona and a knowledge level of the persona for each knowledge domain.

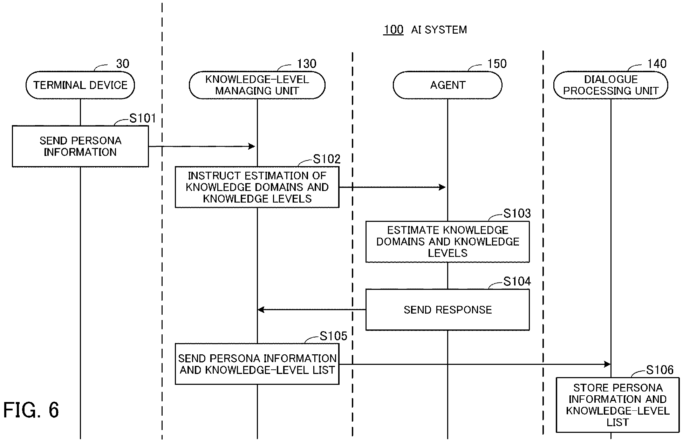

FIG. 6 illustrates an example of procedures of estimation processing for knowledge domains and knowledge levels. The terminal device 30 generates persona information based on input from a user and sends the generated persona information to the AI system 100 (step S101).

In the AI system 100 that receives the persona information, the knowledge-level managing unit 130 sends, to the agent 150, an instruction to estimate knowledge domains of the persona and knowledge levels corresponding to the knowledge domains (Step S102). The instruction to estimate the knowledge domains and the knowledge levels includes the persona information.

The agent 150, by using the LLM 112, estimates a knowledge domain of the persona and a knowledge level in the knowledge domain based on the persona information (step S103). The agent 150 transmits a knowledge-level list indicating the estimated knowledge domain and the knowledge level to the knowledge-level managing unit 130 (step S104).

The knowledge-level managing unit 130 sends the persona information and the knowledge-level list to the dialogue processing unit 140 (step S105). The dialogue processing unit 140 stores the persona information and the knowledge-level list in the memory 102 (step S106).

In this manner, knowledge domains that the persona to be imitated has and knowledge levels for the respective knowledge domains are estimated.

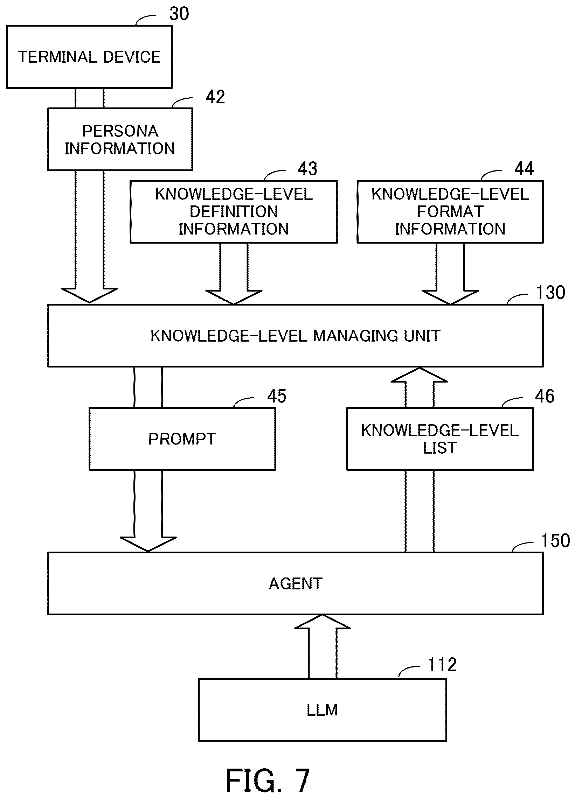

FIG. 7 illustrates an example of information used for estimating knowledge domains and knowledge levels. The knowledge-level managing unit 130, based on persona information 42, knowledge-level definition information 43, and knowledge-level format information 44, generates a prompt 45 that instructs estimation of knowledge domains and knowledge levels. The persona information 42 is information indicating the persona to be imitated. The knowledge-level definition information 43 is information indicating criteria for determining knowledge levels. The knowledge-level format information 44 is information indicating a data format of a knowledge-level list 46.

The knowledge-level managing unit 130 transmits the generated prompt 45 to the agent 150. The agent 150, by using the LLM 112, generates the knowledge-level list 46 in accordance with the prompt 45. The agent 150 transmits the generated knowledge-level list 46 to the knowledge-level managing unit 130.

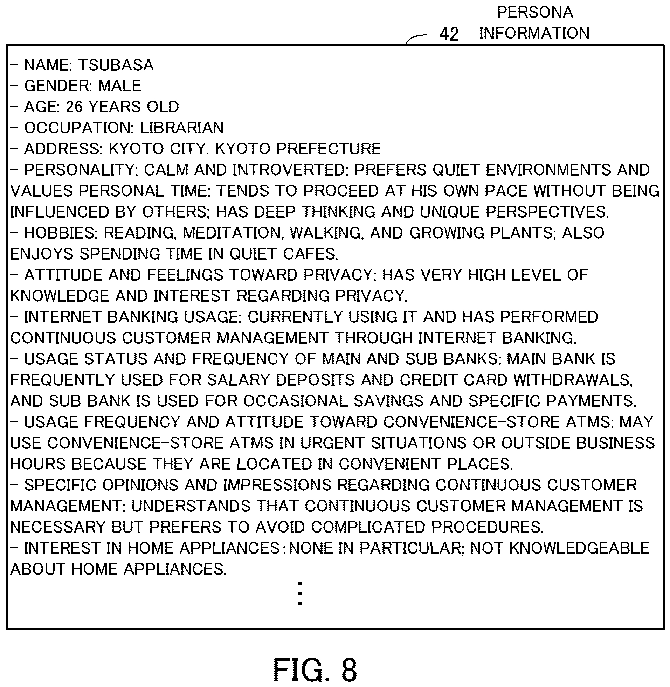

FIG. 8 illustrates an example of persona information. The persona information 42 includes, for example, a list in which attributes of the persona to be imitated are enumerated, and information indicating characteristics of the persona to be imitated in natural language. Examples of attributes of the persona to be imitated include a name, a gender, an age, an occupation, and an address. Examples of information indicating characteristics of the persona to be imitated include a personality, hobbies, and attitudes and feelings toward privacy. In the example in FIG. 8, interest in home appliances is included as information indicating characteristics of the persona to be imitated.

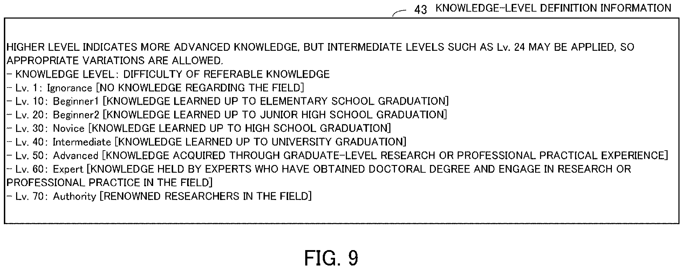

FIG. 9 illustrates an example of the knowledge-level definition information. The knowledge-level definition information 43 includes an instruction to the agent 150 stating that "higher level indicates more advanced knowledge, but intermediate levels such as Lv. 24 may be applied, so appropriate variations are allowed." The knowledge-level definition information 43 also indicates the difficulty of knowledge referable for each knowledge level with respect to the knowledge domain that is subject to estimation.

"Knowledge Level 1 (Lv. 1: Ignorance)" is the knowledge level where no knowledge exists regarding the relevant domain. "Knowledge Level 10 (Lv. 10: Beginner 1)" is the knowledge level where knowledge corresponds to the content learned by the completion of elementary school. "Knowledge Level 20 (Lv. 20: Beginner 2)" is the knowledge level where knowledge corresponds to the content learned by the completion of junior high school. "Knowledge Level 30 (Lv. 30: Novice)" is the knowledge level where knowledge corresponds to the content learned by the completion of high school. "Knowledge Level 40 (Lv. 40: Intermediate)" is the knowledge level where knowledge corresponds to the content learned by the completion of university. "Knowledge Level 50 (Lv. 50: Advanced)" is the knowledge level where knowledge includes research conducted in graduate school or practical experience in a professional field. "Knowledge Level 60 (Lv. 60: Expert)" is the knowledge level of an expert who has obtained a doctoral degree and engages in research or practical work in the relevant domain. "Knowledge Level 70 (Lv. 70: Authority)" is the knowledge level of a prominent researcher in the relevant domain.

By defining the knowledge levels in this manner, the difficulty of knowledge referable for each knowledge level becomes clear, and the specialization of the terminology used during response generation is appropriately controlled. That is, specifying, through simple prompting, that "AA is well understood" or that there is "no knowledge of BB" results in ambiguous criteria, which makes it difficult to restrict technical terminology in accordance with the persona. Improper restriction of technical terminology becomes a factor that leads to hallucinations. Since the knowledge-level definition information 43 clarifies the difficulty of the knowledge for each knowledge level, the technical terminology that the agent 150 may use when imitating the persona becomes accurate, and the occurrence of hallucinations is suppressed.

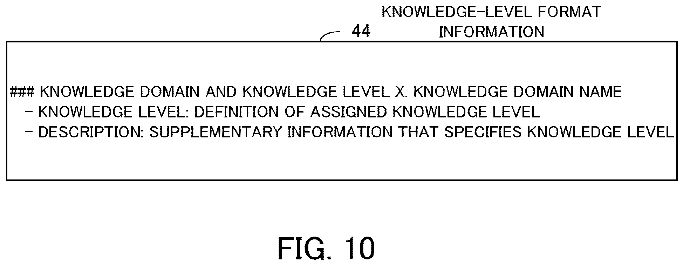

FIG. 10 illustrates an example of the knowledge-level format information. The knowledge-level format information 44 indicates a description format of a knowledge domain and a knowledge level for the knowledge domain in a knowledge-level list. For example, the knowledge-level format information 44 indicates that a knowledge domain name is described, and that a knowledge level and an explanation thereof are described in lines following the knowledge domain name.

Based on the information illustrated in FIGS. 8 to 10, the prompt 45 that instructs the estimation of knowledge domains of the persona and knowledge levels of the persona for the knowledge domains is generated.

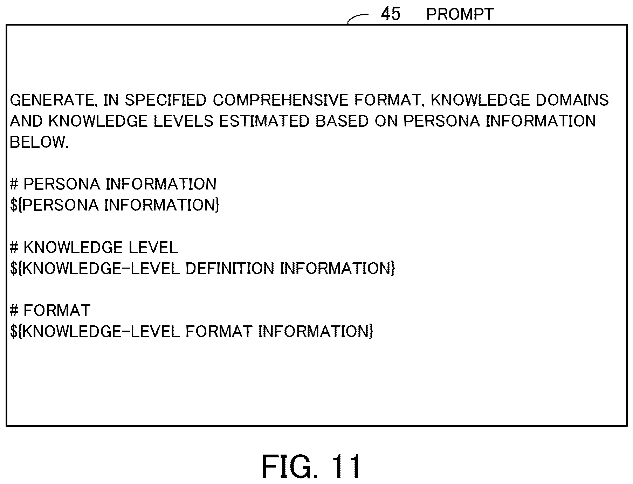

FIG. 11 illustrates an example of a prompt for estimating knowledge domains and knowledge levels. The prompt 45 includes, for example, an instruction to the agent 150 stating that "Generate, in specified comprehensive format, knowledge domains and knowledge levels estimated based on persona information below." In a line following "# Persona Information" in the prompt 45, the persona information 42 illustrated in FIG. 8 is given after the symbol "$". In a line following "# Knowledge Level" in the prompt 45, the knowledge-level definition information 43 illustrated in FIG. 9 is given after the symbol "$". In a line following "# Format" in the prompt 45, the knowledge-level format information 44 illustrated in FIG. 10 is indicated after the symbol "$".

When the agent 150 obtains the prompt 45, inference using the LLM 112 is executed. As a result of the inference, the knowledge-level list 46 is generated.

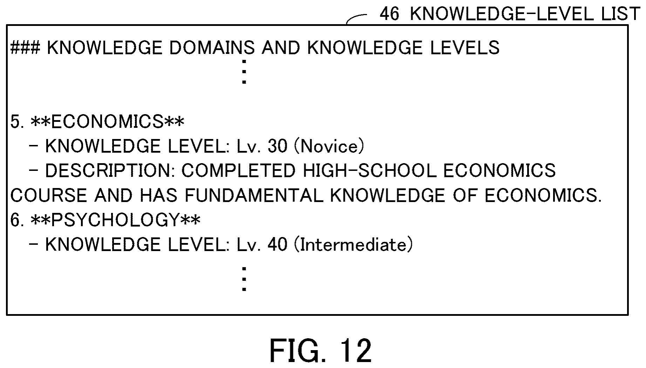

FIG. 12 illustrates an example of a knowledge-level list. In the knowledge-level list 46, knowledge levels for the respective knowledge domains are described in the data format indicated in the knowledge-level format information 44.

The generated knowledge-level list 46 is stored in the dialogue processing unit 140. When the dialogue processing unit 140 obtains the knowledge-level list 46, the dialogue processing unit 140 starts accepting queries from the terminal device 30. When a query is input from the terminal device 30 to the AI system 100, response processing in a dialogue format imitating the persona is performed.

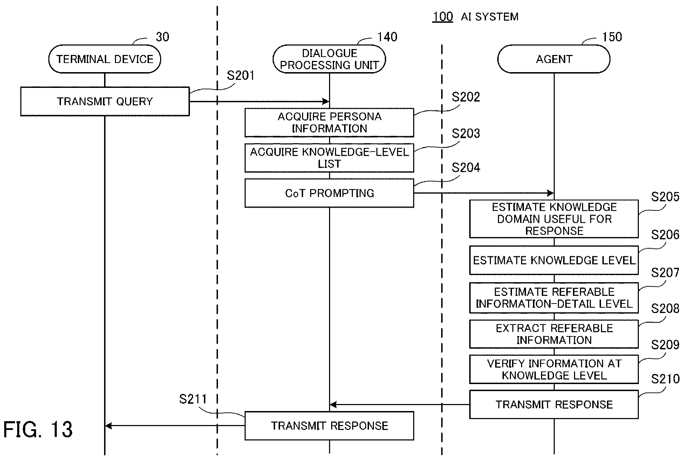

FIG. 13 illustrates an example sequence diagram of a procedure for response processing in a dialogue format that imitates a persona. When a character string indicating a question is input by a user, the terminal device 30 transmits a query including the question to the AI system 100 (step S201). In the AI system 100, the dialogue processing unit 140 acquires the query. The dialogue processing unit 140 acquires the persona information from the memory 102 (step S202). The dialogue processing unit 140 also acquires the knowledge-level list from the memory 102 (step S203). The dialogue processing unit 140 then generates a prompt including the query, the persona information, and the knowledge-level list by CoT prompting, and transmits the generated prompt to the agent 150 (step S204).

The agent 150, according to procedures indicated in the prompt, generates a response to the question by imitating the persona. Specifically, the agent 150 first uses the LLM 112 to estimate a knowledge domain useful for responding to the question indicated in the query (step S205). Next, the agent 150 uses the LLM 112 to estimate the persona's knowledge level for the knowledge domain estimated in step S205 (step S206). Next, the agent 150 uses the LLM 112 to estimate a referable information-detail level in the database for the estimated knowledge domain (step S207). Next, the agent 150 extracts referable information from the database for the estimated knowledge domain (step S208). Next, the agent 150 uses the LLM 112 to verify information in the database for the estimated knowledge domain at the persona's knowledge level (step S209). In the information verification, the agent 150 excludes, for example, information that is unable to be managed at the persona's knowledge level (for example, overly specialized information).

The agent 150 then uses the LLM 112 to generate a response appropriate for the persona's knowledge level by using the information confirmed in step S209. The agent 150 transmits the generated response to the dialogue processing unit 140 (step S210). The dialogue processing unit 140 transmits the response acquired from the agent 150 to the terminal device 30 (step S211).

In this manner, an appropriate response is provided that refers only to knowledge that the persona may know and is composed solely of information that the persona may understand.

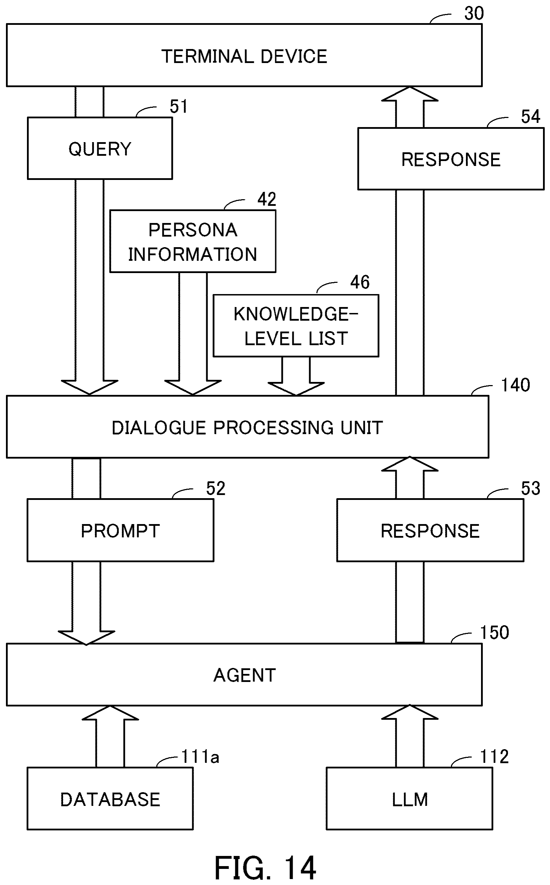

FIG. 14 illustrates an example of information used for generating a response to a question. The dialogue processing unit 140 acquires a query 51 indicating the question from the terminal device 30. The dialogue processing unit 140 generates a prompt 52 including the question indicated by the query 51, the persona information 42, and the knowledge-level list 46, and transmits the prompt 52 to the agent 150. The agent 150 generates a response 53 based on the database 111a corresponding to a knowledge domain useful for responding to the question and the LLM 112, and transmits the response 53 to the dialogue processing unit 140. The dialogue processing unit 140 transmits to the terminal device 30 a response 54 having the same content as the response 53 that is acquired.

The prompt 52 generated by the dialogue processing unit 140 indicates processing procedures of steps S205 to S210 (see FIG. 13), and the agent 150 generates the content of the response in accordance with the procedures. Among the processing of steps S205 to S210, the knowledge-level estimation processing of step S206 becomes useful when the knowledge-level list 46 does not indicate a knowledge level for a knowledge domain useful for responding to the question.

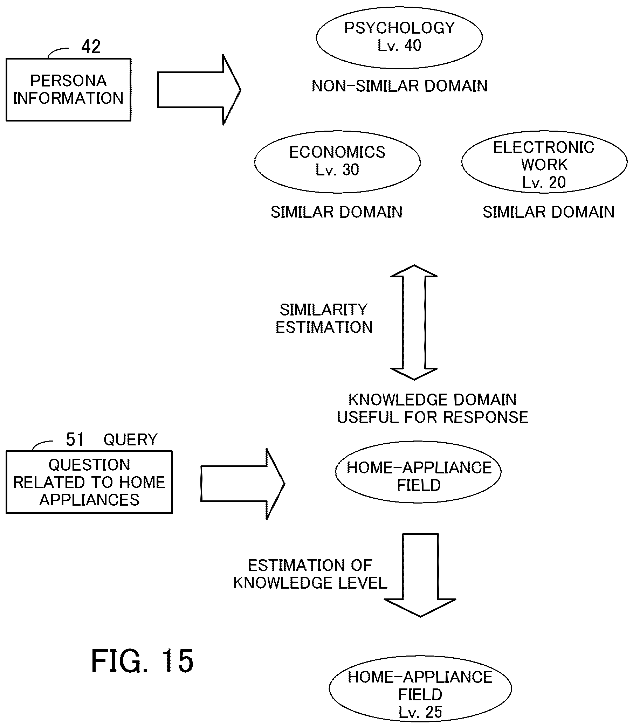

FIG. 15 illustrates an example of processing for estimating a knowledge level of a persona with respect to a knowledge domain useful for responding to a question. For example, when a knowledge level of each knowledge domain that the persona has is estimated based on the persona information 42, the knowledge level of psychology becomes "40", the knowledge level of economics becomes "30", and the knowledge level of electronic work becomes "20". In this case, when a question related to home appliances is input as the query 51, knowledge in a home-appliance domain is needed as knowledge useful for responding to the question.

A home-appliance domain is not included in the knowledge domains estimated based on the persona information 42. In this case, the agent 150, in accordance with the prompt 52, estimates similarity between each knowledge domain that the persona has and the knowledge domain useful for responding to the question. Then the agent 150 estimates a knowledge level of the persona with respect to the knowledge domain useful for responding to the question based on similarity between each knowledge domain that the persona has and the knowledge domain useful for responding to the question.

In the example of FIG. 15, the knowledge in the home-appliance domain includes knowledge such as prices of home appliances and sales shares (popularity) of home appliances, so similarity with knowledge of economics is recognized. The knowledge in the home-appliance domain also includes knowledge concerning technical characteristics of home appliances, so similarity with knowledge of electronic work is recognized. On the other hand, similarity is not recognized between knowledge in the home-appliance domain and knowledge of psychology. Therefore, the knowledge domains similar to the home-appliance domain, which is the knowledge domain useful for responding to the question, are economics and electronic work. Accordingly, based on the persona's knowledge level "30" for economics and the persona's knowledge level "20" for electronic work, a knowledge level of the persona for the home-appliance domain is estimated to be "25", for example.

In this way, by estimating a knowledge level of the persona with respect to the knowledge domain useful for responding to the question, influence of knowledge levels for knowledge domains irrelevant to that knowledge domain on the estimation of the knowledge level for the knowledge domain useful for responding to the question is suppressed.

The series of processing executed by the agent 150 is represented by the prompt 52 generated by CoT prompting.

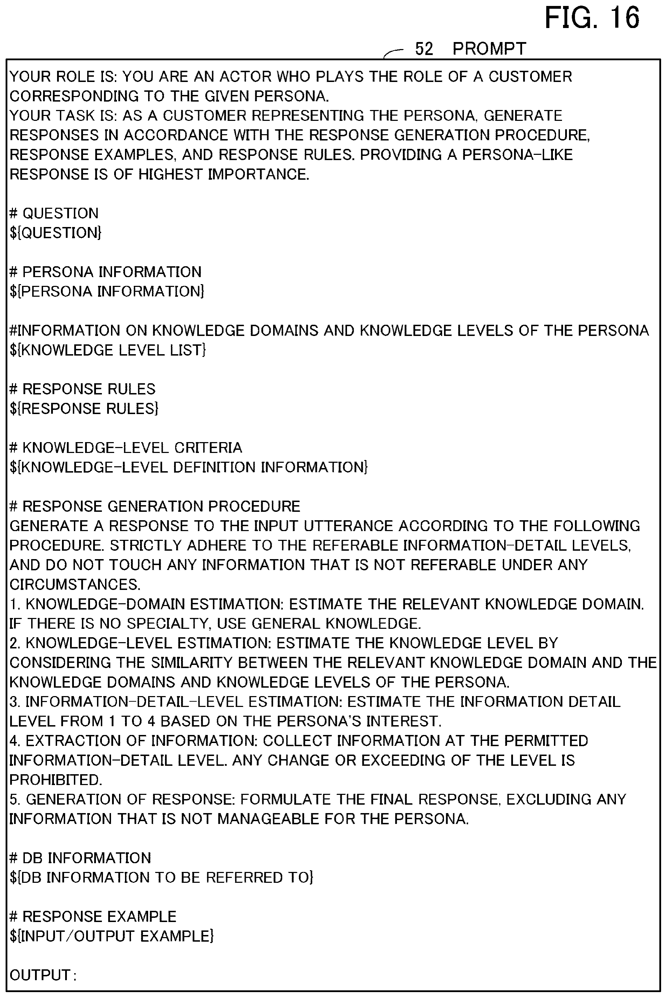

FIG. 16 illustrates an example of the prompt generated by CoT prompting. The prompt 52 specifies the role of the agent 150 as "Your role is: You are an actor who plays the role of a customer corresponding to the given persona." The prompt 52 further designates the task executed by the agent 150 as "Your task is: As a customer representing the persona, generate responses in accordance with the response generation procedure, response examples, and response rules. Providing a persona-like response is of highest importance."

In the line following "# Question" in the prompt 52, a character string representing the question included in the query 51 is indicated following "$". In the line following "# Persona information" in the prompt 52, the content of the persona information 42 is indicated following "$". In the line following "# Information on knowledge domains and knowledge levels of the persona" in the prompt 52, the content of the knowledge-level list 46 is indicated following "$". In the line following "# Response rules" in the prompt 52, the response rules to be observed during response generation are indicated following "$". In the line following "# Knowledge-level criteria" in the prompt 52, the knowledge-level definition information 43 is indicated following "$".

In the lines following "# Response generation procedure" in the prompt 52, the processing procedure of steps S205 to S210 illustrated in FIG. 13 is indicated. Specifically, the following content is described.

"Generate a response to the input utterance according to the following procedure. Strictly adhere to the referable information-detail levels, and do not touch any information that is not referable under any circumstances.
1. Knowledge-domain estimation: Estimate the relevant knowledge domain. If there is no specialty, use general knowledge.
2. Knowledge-level estimation: Estimate the knowledge level by considering the similarity between the relevant knowledge domain and the knowledge domains and knowledge levels of the persona.
3. Information-detail-level estimation: Estimate the information detail level from 1 to 4 based on the persona's interest.
4. Extraction of information: Collect information at the permitted information-detail level. Any change or exceeding of the level is prohibited.
5. Generation of response: Formulate the final response, excluding any information that is not manageable for the persona.

In the line following "# DB information" in the prompt 52, database information to be referenced is indicated following "$". In the line following "# Response example" in the prompt 52, an example of a response to the question is indicated following "$".

By transmitting the prompt 52 configured as described above to the agent 150, the agent 150 generates a response that correctly imitates a specific persona. In doing so, the agent 150 utilizes the general-purpose LLM 112 to generate the response. Therefore, fine-tuning of the LLM 112 for adaptation to the persona is not needed.

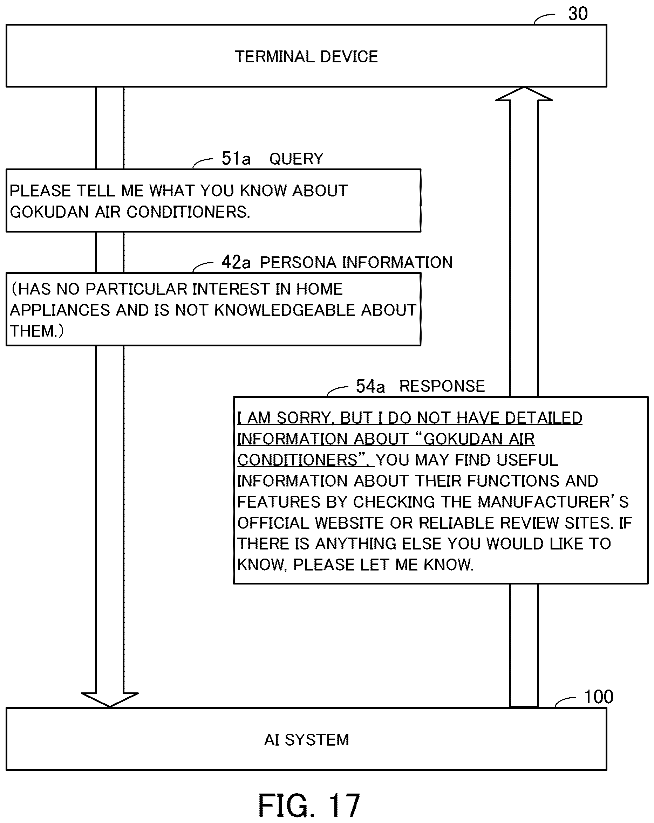

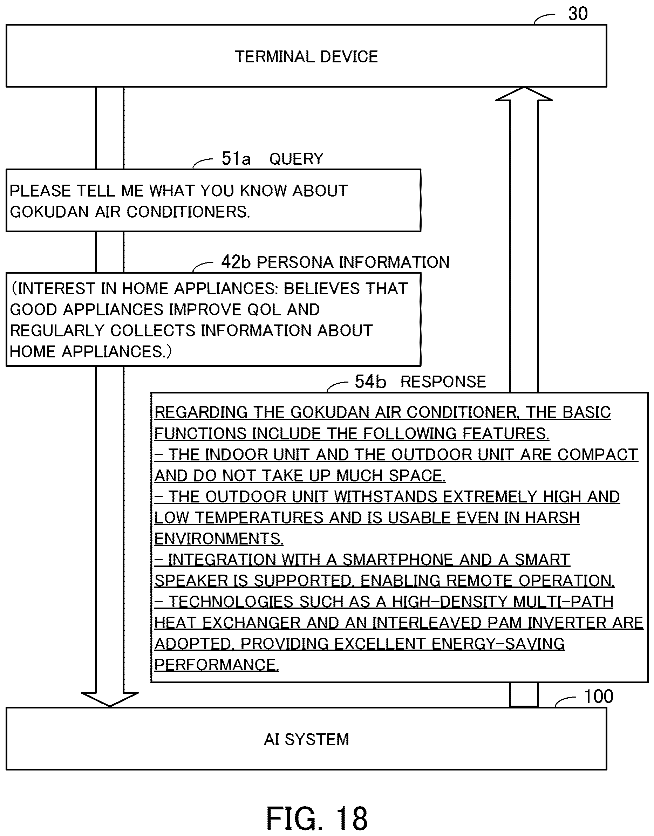

Next, with reference to FIGS. 17 to 22, specific examples of responses to questions will be described. FIG. 17 and FIG. 18 illustrate examples in which the AI system 100 is used for a sales training simulation.

FIG. 17 illustrates an example in which a persona having no interest in home appliances is imitated to generate a response to a question concerning a home appliance. For example, persona information 42a representing that the persona has no particular interest in home appliances and is not familiar with home appliances is transmitted from the terminal device 30 to the AI system 100. Thereafter, it is assumed that a query 51a including a question such as "Please tell me what you know about Goku-dan air conditioners." is transmitted from the terminal device 30 to the AI system 100.

In this case, the AI system 100 transmits a response 54a to the terminal device 30, where the response 54a does not include detailed information about the specified home appliance "Goku-dan air conditioner". In the example of FIG. 17, the response 54a transmitted is "I am sorry, but I do not have detailed information about 'Goku-dan air conditioners'. You may find useful information about their functions and features by checking the manufacturer's official website or reliable review sites. If there is anything else you would like to know, please let me know."

FIG. 18 illustrates an example in which a persona having an interest in home appliances is imitated to generate a response to a question concerning a home appliance. For example, persona information 42b representing that the persona has an interest in home appliances is transmitted from the terminal device 30 to the AI system 100. Thereafter, it is assumed that the query 51a similar to that in FIG. 17 is transmitted from the terminal device 30 to the AI system 100. In this case, the AI system 100 transmits a response 54b including detailed information about the specified home appliance "Goku-dan air conditioner" to the terminal device 30. In the example of FIG. 18, the response 54b transmitted is "Regarding the Goku-dan air conditioner, the basic functions include the following features. The indoor unit and the outdoor unit are compact and do not take up much space. The outdoor unit withstands exceedingly high and low temperatures and is usable even in harsh environments. Integration with a smartphone and a smart speaker is supported, enabling remote operation. Technologies such as a high-density multi-path heat exchanger and an interleaved PAM inverter are adopted, providing excellent energy-saving performance."

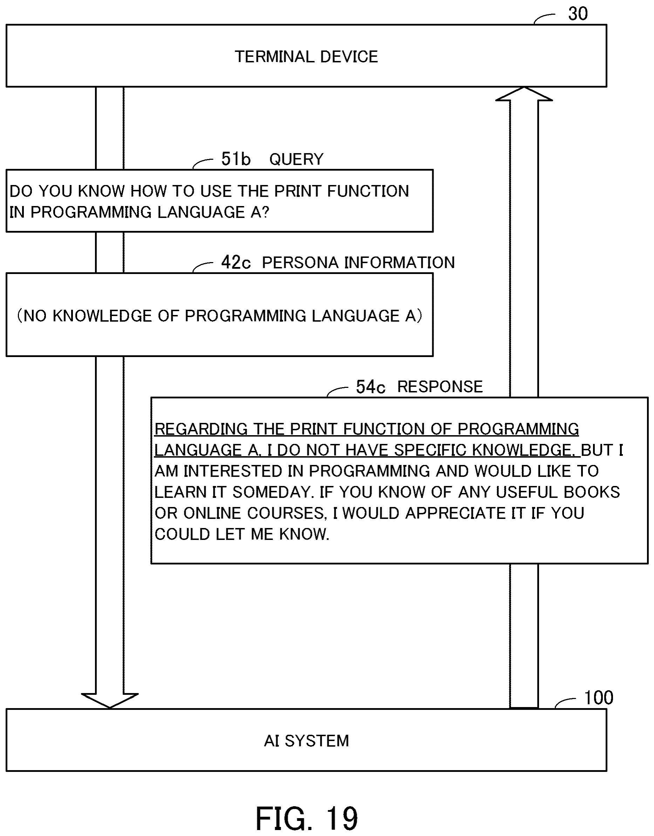

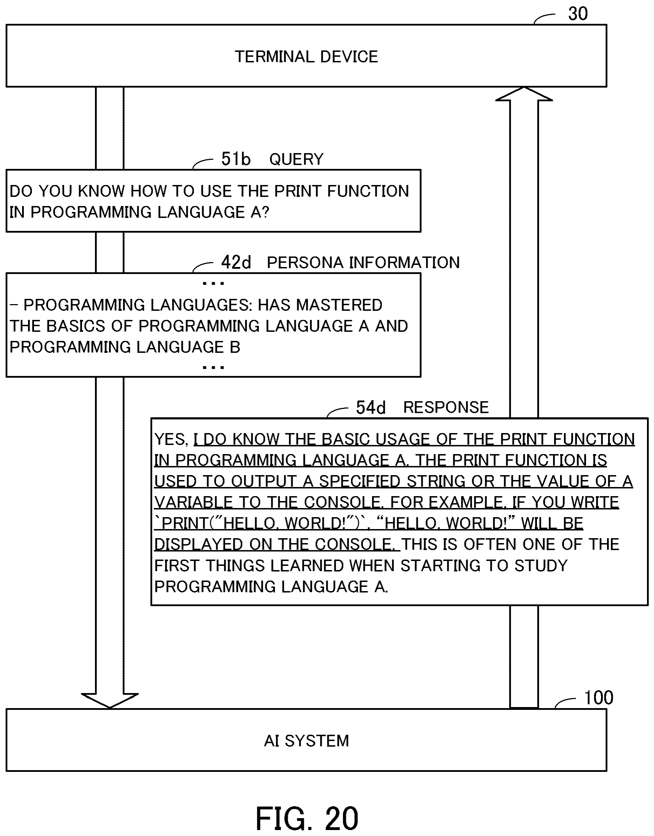

FIG. 19 and FIG. 20 illustrate examples in which the AI system 100 is used for a programming education simulation.

FIG. 19 illustrates an example in which a persona having no interest in programming languages is imitated to generate a response to a question concerning a programming language. For example, persona information 42c indicating that the persona has no knowledge of programming languages is transmitted from the terminal device 30 to the AI system 100. Thereafter, it is assumed that a query 51b including a question such as "Do you know how to use the print function in programming language A?" is transmitted from the terminal device 30 to the AI system 100.

In this case, the AI system 100 transmits a response 54c to the terminal device 30, where the response 54c does not include specific information about the specified "programming language A". In the example of FIG. 19, the response 54c transmitted is "Regarding the print function of programming language A, I do not have specific knowledge, but I am interested in programming and would like to learn it someday. If you know of any useful books or online courses, I would appreciate it if you could let me know."

FIG. 20 illustrates an example in which a persona having an interest in programming languages is imitated to generate a response to a question concerning a programming language. For example, persona information 42d representing that the persona has proficiency in programming languages is transmitted from the terminal device 30 to the AI system 100. For example, the persona information 42d includes a description such as "Programming languages: Has mastered the basics of programming language A and programming language B." Thereafter, it is assumed that the query 51b similar to that in FIG. 19 is transmitted from the terminal device 30 to the AI system 100.

In this case, the AI system 100 transmits a response 54d including specific information about the specified "programming language A" to the terminal device 30. In the example of FIG. 20, the response 54d transmitted is "Yes, I do know the basic usage of the print function in programming language A. The print function is used to output a specified string or the value of a variable to the console. For example, if you write 'print("Hello, World!")', "Hello, World!" will be displayed on the console. This is often one of the first things learned when starting to study programming language A."

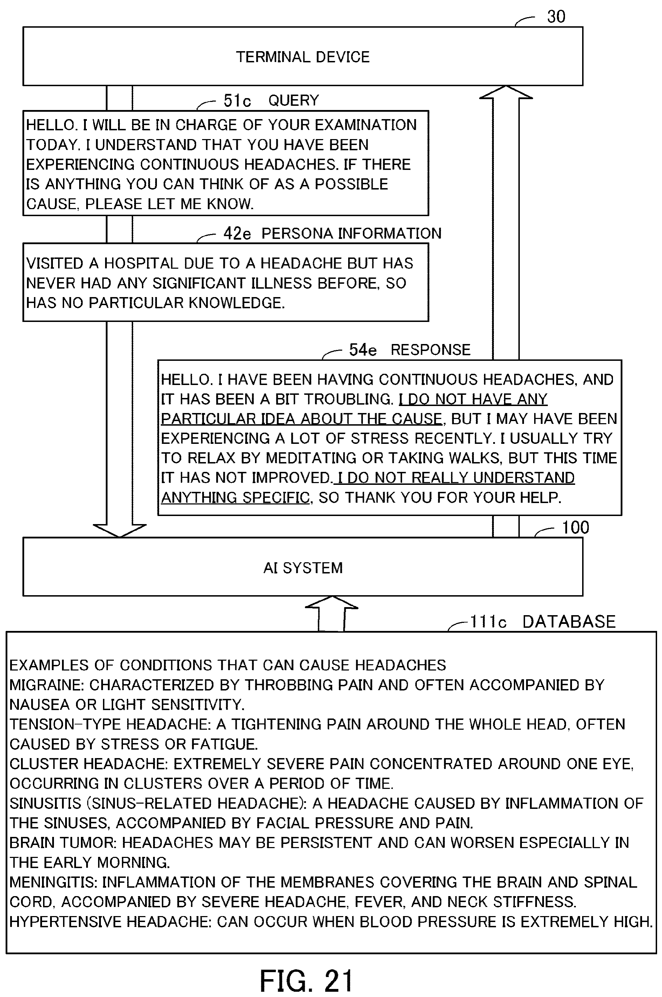

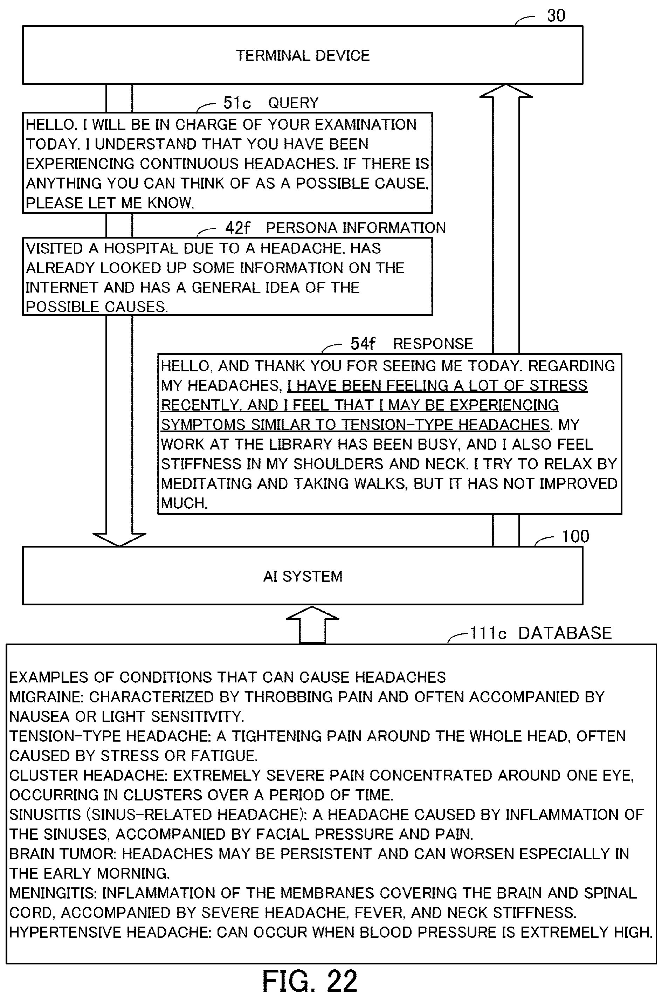

FIG. 21 and FIG. 22 illustrate examples in which the AI system 100 is used for a medical-consultation simulation. In the medical-consultation simulation, for example, a question-and-answer simulation is performed after intentionally providing differences in the patient's recognition of symptoms (knowledge or experience concerning diseases). In the examples of FIG. 21 and FIG. 22, common reference information related to diseases is provided, and only the persona information differs.

FIG. 21 illustrates an example in which a persona having no knowledge about a disease is imitated to generate a response to a question concerning the disease. For example, persona information 42e clearly indicating that the persona has little knowledge about the disease with which the persona is afflicted is transmitted from the terminal device 30 to the AI system 100. For example, the persona information 42e includes a description such as "Visited a hospital due to a headache but has never had any significant illness before, so has no particular knowledge." Thereafter, for example, it is assumed that a query 51c including a question such as "Hello. I will be in charge of your examination today. I understand that you have been experiencing continuous headaches. If there is anything you think of as a possible cause, please let me know." is transmitted from the terminal device 30 to the AI system 100.

The AI system 100 has the database 111c concerning medical information. The database 111c illustrates, for example, examples of diseases that cause headaches. However, because the persona information 42e indicates that the persona has little knowledge about diseases, the AI system 100 generates a response 54e without referring to most of the information described in the database 111c.

For example, the AI system 100 transmits the response 54e to the terminal device 30 in which the explanation is limited to the symptoms and no further specialized information is included. In the example of FIG. 21, the transmitted response 54e is "Hello. I have been having continuous headaches, and it has been a bit troubling. I do not have any particular idea about the cause, but I may have been experiencing a lot of stress recently. I usually try to relax by meditating or taking walks, but this time it has not improved. I do not really understand anything specific, so thank you for your help." In the response 54e, it is explained that the persona has no idea about the cause of the headache and also has no specific knowledge.

FIG. 22 illustrates an example in which a persona having knowledge about a disease is imitated to generate a response to a question concerning the disease. For example, persona information 42f clearly indicating that the persona has collected information about the disease with which the persona is afflicted and has basic knowledge is transmitted from the terminal device 30 to the AI system 100. For example, the persona information 42f includes a description such as "Visited a hospital due to a headache. Has already looked up some information on the Internet and has a general idea of the possible causes." Thereafter, for example, it is assumed that the query 51c similar to that of FIG. 21 is transmitted from the terminal device 30 to the AI system 100.

In this case, the AI system 100 refers to the information in the database 111c and transmits to the terminal device 30 a response 54f that includes information likely to be related to the cause of the disease, in addition to an explanation of the symptoms. In the example of FIG. 22, the transmitted response 54f is "Hello, and thank you for seeing me today. Regarding my headaches, I have been feeling a lot of stress recently, and I feel that I may be experiencing symptoms similar to tension-type headaches. My work at the library has been busy, and I also feel stiffness in my shoulders and neck. I try to relax by meditating and taking walks, but it has not improved much." In the response 54f, it is explained that stress may be a cause of the headache and that the symptoms seem close to those of a tension headache.

When the examples of FIG. 21 and FIG. 22 are compared, only when the persona information 42f indicating that the persona has some idea about the disease is input, the response 54f utilizing the information indicated in the database 111c (that stress is a cause of a tension headache) is generated.

As illustrated in FIG. 19 to FIG. 22, when no information relevant to the databases or the question is included in the persona information, the AI system 100 prevents generating responses that deviate from the persona's knowledge. On the other hand, when the persona has information related to the question, the AI system 100 is allowed to handle detailed information.

In the second embodiment, in addition to restricting information based on the knowledge level of the persona, reference restriction is performed by using the information detail levels for respective reference-unit information in the database 111a, 111b and so on. This is in order to ensure exclusion, from the response content, of information that the persona is unable to utilize in response generation using the LLM 112. That is, when the agent 150 is instructed to restrict information based on the persona's knowledge level, the agent 150 restricts the information learned by the LLM 112 according to the knowledge level. Even in such a case, if information in the database 111a, 111b, and so on exceeding the knowledge level remains referable, such information may be referenced and reflected in the response. By adding reference restriction to the information in the database 111a, 111b, and so on according to the persona's knowledge level, generation of a response including information of a difficulty level exceeding the persona's knowledge level is reliably prevented.

### (c) Other Embodiments

The LLM 112 in the AI system 100 is not a model trained for imitating a specific persona. Therefore, the functions of the LLM 112 and the agent 150 may be provided as functions of a general-purpose AI system that is available to the AI system 100 via the network 20. In such a case, the AI system 100 transmits a prompt to, for example, a system such as a generative AI that is provided as an external service.

Although the embodiments have been described above by way of example, the configurations of the respective units illustrated in the embodiments may be replaced with other elements having similar functions. Further, any other optional components or steps may be added. Furthermore, any combination of two or more of the configurations (features) described in the above embodiments may also be adopted.

According to one aspect, output of a response including knowledge that the imitation target would not have is suppressed.

## Claims

1. A computer program that causes a computer to execute a process comprising:
determining, based on target information (3) regarding an imitation target, a first knowledge domain in which the imitation target has knowledge and a first knowledge level of the imitation target regarding the first knowledge domain; and
instructing, upon receiving an input of a first question (4), an agent (12b) that responds to a question by using a language model (1) to generate a response to the first question (4) by imitating thoughts of the imitation target that are referable to information restricted based on the first knowledge domain and the first knowledge level.

2. The computer program according to claim 1, wherein the instructing of the response to the first question includes instructing generation of the response to the first question through estimation of a second knowledge domain that is useful for the response to the first question (4), and estimation of a second knowledge level of the imitation target regarding the second knowledge domain based on the first knowledge domain and the first knowledge level.

3. The computer program according to claim 2, wherein the instructing of the response to the first question includes instructing the estimation of the second knowledge level based on the first knowledge level of the first knowledge domain that is similar to the second knowledge domain.

4. The computer program according to claim 2, wherein
the instructing of the response to the first question includes
instructing estimation of a first information-detail level that indicates, based on the second knowledge level, a degree to which the imitation target is able to utilize detailed information regarding the second knowledge domain, and
instructing generation of the response to the first question (4) by limiting information referable by the imitation target to information at the first information-detail level among information regarding the second knowledge domain.

5. The computer program according to claim 1, wherein the determining of the first knowledge domain and the first knowledge level includes instructing the agent (12b) to estimate the first knowledge domain and to estimate the first knowledge level based on the target information (3).

6. The computer program according to claim 1, wherein the process further includes:
instructing the agent (12b) to estimate an information detail level, for each piece of reference-unit information included in reference information (2) indicating knowledge for each of a plurality of knowledge domains, the information detail level indicating how detailed the reference-unit information is.

7. A response-generation support method executed by a computer, the response-generation support method comprising:
determining, based on target information (3) regarding an imitation target, a first knowledge domain in which the imitation target has knowledge and a first knowledge level of the imitation target regarding the first knowledge domain; and
instructing, upon receiving an input of a first question (4), an agent (12b) that responds to a question by using a language model (1) to generate a response to the first question (4) by imitating thoughts of the imitation target that are referable to information restricted based on the first knowledge domain and the first knowledge level.

8. An information processing apparatus (10) comprising:
processing means (12) for:
determining, based on target information (3) regarding an imitation target, a first knowledge domain in which the imitation target has knowledge and a first knowledge level of the imitation target regarding the first knowledge domain; and
instructing, upon receiving an input of a first question (4), an agent (12b) that responds to a question by using a language model (1) to generate a response to the first question (4) by imitating thoughts of the imitation target that are referable to information restricted based on the first knowledge domain and the first knowledge level.
